# EUROPÄISCHE PATENTSCHRIFT

(11) **EP 0 586 446 B1**
(45) Veröffentlichungstag und Bekanntmachung des Hinweises auf die Patenterteilung: **18.09.1996**
(21) Anmeldenummer: 92910498.2
(22) Anmeldetag: 15.05.1992
(51) Int. Cl.: C01B 13/14, C01F 7/00, C08K 3/24, C08K 9/04, C09C 1/00, C09C 3/10

(54) **KATIONISCHE SCHICHTVERBINDUNGEN MODIFIZIERT MIT POLYMEREN**
CATIONIC LAYER COMPOUNDS MODIFIED WITH POLYMERS
COMPOSES STRATIFIES CATIONIQUES MODIFIES PAR DES POLYMERES

(30) Priorität: 24.05.1991 DE 4117034
(43) Veröffentlichungstag der Anmeldung: 16.03.1994
(73) Patentinhaber: Henkel Kommanditgesellschaft auf Aktien, 40191 Düsseldorf (DE)
(72) Erfinder: ENDRES, Helmut, D-4018 Langenfeld (DE); FISCHER, Herbert, D-4000 Düsseldorf 1 (DE); LÖFFELHOLZ, Frido, D-2850 Bremerhaven (DE); WEDL, Peter, D-2850 Bremerhaven (DE); WORSCHECH, Kurt, D-2854 Loxstedt (DE); HANSEN, Angela, D-4000 Düsseldorf 13 (DE); GEISMAR, Günther, D-4150 Krefeld 1 (DE)
(86) Internationale Anmeldenummer: EP9201078
(87) Internationale Veröffentlichungsnummer: WO9220619

(56) Entgegenhaltungen:
- EP-A- 0 189 899
- EP-A- 0 335 544
- EP-A- 0 407 139
- DE-A- 1 939 544
- US-A- 4 208 317
- Kirk-othmer encyclopedia of chemical technology; 3rd Ed., 1979, vol 7, page 833-848 Wiley, New York (US)

## Beschreibung

Die Erfindung betrifft spezielle kationische Schichtverbindungen mit einer spezifischen Oberfläche nach BET von mindestens 50 m²/g, die modifiziert sind mit mindestens einem polymeren Additiv sowie Verfahren zur Herstellung dieser kationischen Schichtverbindungen und deren Verwendung als Co-Stabilisatoren für mit Calcium- und /oder Zinksalzen stabilisierte halogenhaltige Kunststoffe.

Halogenhaltige Kunststoffe oder daraus hergestellte Formmassen neigen bekanntermaßen unter Hitzebedingungen oder beim Aussetzen an Ultraviolettlicht zu einem Abbau bzw. Zersetzung. Um dem entgegenzuwirken werden herkömmlicherweise Schwermetallverbindungen auf Basis Blei, Zinn, Barium und/oder Cadmium eingesetzt. Aus arbeitsphysiologischer Sicht besteht jedoch ein Bedürfnis, diese durchaus wirkungsvollen Stabilisatoren gegen weniger gesundheitsgefährdende Stoffe auszutauschen. Als Alternative zu den Schwermetallverbindungen kommen beispielsweise Calcium- und Zinkseifen als Stabilisatoren in Betracht, die jedoch nicht das Leistungsvermögen der Schwermetallverbindungen erreichen, so daß zur Steigerung ihrer stabilisierenden Wirkung Co-Stabilisatoren benötigt werden.

In der deutschen Patentschrift DE-C-30 19 632 ist die Verwendung von Hydrotalciten zur Inhibierung des thermischen oder ultravioletten Abbaus von halogenhaltigen thermoplastischen Harzen beschrieben. In dieser Patentschrift werden Untersuchungsergebnisse mitgeteilt, die zeigen, daß, wenn man am Markt leicht erhältliche Hydrotalcite beispielsweise in Vinylchloridharze einarbeitet, diese Hydrotalcite die Entchlorierung der Harze beim Erhitzen beschleunigen oder sogar eine Zersetzung, Schwarzfärbung oder Schaumbildung der Harze bewirken. Zudem wurde festgestellt, daß diese Hydrotalcite eine schlechte Dispergierbarkeit in den Harzen haben und die rheologischen Eigenschaften der Harze während des Verformens sowie das Aussehen der Formprodukte nachteilig beeinflussen. Diese Untersuchungsergebnisse werden auf die geringe Kristallgröße der gewöhnlichen Hydrotalcite sowie auf die große spezifische Oberfläche nach BET von mindestens etwa 50 m²/g und die Belegung der Hydrotalcitteilchen mit Nasser zurückgeführt. Demgemäß wird in der deutschen Patentschrift DE-C-30 19 632 vorgeschlagen, Hydrotalcite mit einem großen Kristallkorn und mit einer spezifischen Oberfläche nach BET von nicht mehr als 30 m²/g, die gegebenenfalls mit einem anionischen oberflächenaktiven Mittel wie Natriumstearat belegt sein kann, zu verwenden. Auch in der europäischen Patentanmeldung EP-A-189 899 werden Harzzusammensetzungen beschrieben, die Hydrotalcite mit spezifischen Oberflächen nach BET kleiner 30 m²/g enthalten. Aus dieser europäischen Patentanmeldung ist bekannt, daß die Hydrotalcite modifiziert sein können mit höheren Fettsäureestern, anionischen oberflächenaktiven Mitteln und Kupplungsmitteln der Silan- oder Titan-Typen, um die Kompatibilität des Hydrotalcits mit den Kunststoffmassen zu verbessern.

Kationische Schichtverbindungen, die solch kleine spezifischen Oberflächen aufweisen, sind jedoch nur mit hohem Aufwand zugänglich, da die Kristallisation des Festkörpers aus der wäßrigen Phase im Druckreaktor bei Temperaturen deutlich über dem Normalsiedepunkt des Wassers erfolgen muß. Dies bedingt einen hohen technischen Aufwand sowie infolge der langen Kristallisationszeiten eine unbefriedigende Raum-Zeit-Ausbeute. Zudem ist die Verwendung von Hydrotalciten mit kleinen spezifischen Oberflächen mit dem Nachteil behaftet, daß bei der thermischen Zersetzung von vinylchloridharzen entstehender Chlorwasserstoff nur an einer sehr kleinen Oberfläche abgefangen werden kann.

Die Aufgabe der vorliegenden Erfindung bestand darin, Co-Stabilisatoren für halogenhaltige Kunststoffe bereitzustellen, die sich mit Calcium- und Zinkverbindungen vertragen, in den halogenhaltigen Kunststoffen dispergierbar sind, ohne deren rheologisches Verhalten nachteilig zu beeinflussen, sowie aus arbeitsphysiologischer Sicht unbedenklich sind. Zudem sollten die Co-Stabilisatoren in der Lage sein, die bei der Zersetzung von halogenhaltigen Kunststoffen entweichenden Produkte wie Chlorwasserstoff abzufangen.

Gegenstand der vorliegenden Erfindung sind kationische Schichtverbindungen der allgemeinen Formel I

[M^{(II)}ₓM^{(III)}(OH)_{y}](Aⁿ⁻)_{z} · m H₂O (I)

in der
- M^{(II)}: für mindestens ein zweiwertiges Metallion,
- M^{(III)}: für mindestens ein dreiwertiges Metallion,
- Aⁿ⁻: für ein Säureanion der Ladung n (n = 1, 2 oder 3) stehen und die Bedingungen 1 < x < 5, 0 ≦ z < y, (y + nz) = 2x + 3 und 0 < m < 10 gelten,
mit einer spezifischen Oberfläche nach BET von mindestens 50 m²/g und modifiziert mit Additiven, dadurch gekennzeichnet, daß sie
A) mit einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
gemäß Anspruch 1 modifiziert sind.

Die kationischen Schichtverbindungen der allgemeinen Formel I sind an sich bekannte Verbindungen, deren Struktur und Herstellung beispielsweise von W. T. Reichle in Chemtec (Januar 1986), Seiten 58-63, beschrieben werden. Bevorzugt im Sinne der Erfindung werden kationische Schichtverbindungen der allgemeinen Formel I, in der M^{(II)} für mindestens ein zweiwertiges Metallion, ausgewählt aus der Gruppe Magnesium, Calcium, Zink, Barium und Strontium steht. Bevorzugt steht M^{(II)} lediglich für ein zweiwertiges Metallion aus der genannten Gruppe und insbesondere für Magnesium. Zweckmäßerweise steht in der allgemeinen Formel I M^{(III)} für mindestens ein dreiwertiges Metallion ausgewählt aus der Gruppe Aluminium, Wismut, Antimon, Bor, Gallium und Indium, vorzugsweise lediglich für ein dreiwertiges Metallion dieser genannten Gruppe und insbesondere für Aluminium. Ganz besonders bevorzugt werden kationische Schichtverbindungen der allgemeinen Formel I, in denen Aⁿ⁻ für ein Säureanion mit der Ladung n ausgewählt aus der Anionengruppe Carbonat, Hydrogencarbonat, Perchlorat, Acetat, Nitrat, Tartrat, Oxalat, Hydroxid und Jodid steht, vorzugsweise für Carbonat. Wenn bei der Erläuterung zu obiger Formel I von mindestens einem zweiwertigen oder mindestens einem dreiwertigen Metallion die Rede ist, so bedeutet dies, daß in der kationischen Schichtverbindung auch unterschiedliche zweiwertige oder dreiwertige Metallionen nebeneinander vorliegen können. Die Indices x, y und z sowie m können ganze oder gebrochene Zahlen innerhalb der angegebenen Bedingungen sein, wobei z auch Null bedeuten kann. Besonders vorteilhaft sind kationische Schichtverbindungen der allgemeinen Formel I, in der M^{(II)} für Magnesium und M^{(III)} für Aluminium und Aⁿ⁻ für Carbonat steht. Ein Beispiel für diese bevorzugte Gruppe ist der als Mineral natürlich vorkommende Hydrotalcit, dem üblicherweise die Zusammensetzung

[Mg₆ Al₂ (OH)₁₆]CO₃ · 4 H₂O

zugeschrieben wird (vergleiche Chimia 24, Seiten 99-108; 1970), die durch die Division um den Faktor 2 auf die allgemeine Formel I umrechenbar ist. Insbesondere geeignet sind synthetische Hydrotalcite, die auch als basische Aluminium-Magnesium-Carbonate bezeichnet werden, und nach dem in der deutschen Auslegeschrift DE-B-15 92 126 und den in der deutschen Offenlegungsschrift DE-A-20 61 114 oder DE-A-29 05 256 beschriebenen Verfahren hergestellt werden können. Ganz besonders bevorzugt sind die Hydrotalcite der Formel

[Mg₄Al₂(OH)₁₂](CO₃) · m H₂O,

in der
m die bereits gegebene Bedeutung hat, die in Anlehnung an die deutsche Patentschrift DE-C- 33 06 822 hergestellt werden können. In der Patentschrift DE-C-33 06 822 wird gelehrt, daß durch Umsetzen von Aluminiumhydroxid mit Magnesiumhydroxid oder Magnesiumoxid in Gegenwart von basischem Magnesiumcarbonat als Carbonat-Ionenspender bei einer Temperatur von 50 °C bis 100 °C und anschließender Sprühtrocknung aus der Suspension Hydrotalcite der Formel [Mg₆Al₂(OH)₁₂](CO₃)₃ · 4 H₂O erhalten werden. Im Sinne der Erfindung ist die Herstellung der besonders bevorzugten Hydrotalcite jedoch nicht auf dieses spezielle Verfahren beschränkt. So kann die Umsetzung auch in Gegenwart anderer Carbonatsalze erfolgen, obgleich dies durch Einbringen von Fremdionen weniger bevorzugt ist. Desweiteren kann die Trocknung aus der Suspension auch durch sonstige technisch gebräuchliche Separations- und Trocknungsverfahren erfolgen, obgleich die Sprühtrocknung bevorzugt ist. Ebenso können die Einsatzverhältnisse an Magnesium-, Aluminium- und/oder Carbonationen variiert werden.

Kationische Schichtverbindungen, die nach einem dieser Verfahren hergestellt werden, weisen eine spezifische Oberfläche nach BET von mindestens 50 m²/g, vorzugsweise zwischen 70 und 180 m²/g auf. Im Sinne der Erfindung entspricht der Begriff der spezifischen Oberfläche nach BET der Definition in Römpp's Chemie Lexikon, Band 1, 8. Auflage, 1979, Seite 423.

Erfindungsgemäß sollen die kationischen Schichtverbindungen mit einem oder mehren polymeren Additiven A) modifiziert sein, die in polaren organischen Lösungsmitteln und/oder Wasser mit pH-Werten über 8, vorzugsweise mit pH-Werten von 9 bis 12, löslich sind und ein durchschnittliches (Zahlenmittel) Molekulargewicht von 500 bis 50000 besitzen. Der Begriff "löslich" bedeutet in diesem Zusammenhang, daß die polymeren Additive in den Lösungsmitteln zu mehr als 0,01 Gew.-% in einer wäßrigen Lösung mit pH 10, eingestellt mit Alkalihydroxiden bei 20 °C, vorzugsweise zu mindestens 0,1 Gew.-% und insbesondere unter den angegebenen Bedingungen vollständig klar, gelöst sind. Der Begriff der polaren organischen Lösungsmittel umfaßt bei Raumtemperatur (15 bis 25 °C) flüssige Kohlenwasserstoffverbindungen, die mindestens einen elektronegativeren Substituenten als Kohlenstoff tragen. Dazu zählen Chlorkohlenwasserstoffe, Alkohole, Ketone, Ester, Ether und/oder Glykolether. Geeignete polare organische Lösungsmittel sind Methanol, Ethanol, n-Butanol, Aceton, Methylethylketon, Methylisobutylketon, Cyclohexanol, Isophoron, Ethylacetat, Milchsäureethylester, 2-Methoxyethylacetat, Tetrahydrofuran, Ethylglykolmonomethylether, Diethylenglykolmonoethylether. Die Löslichkeit der polymeren Additive gewährleistet, daß die Oberfläche der kationischen Schichtverbindungen nach einem der noch zu beschreibenden erfindungsgemäßen Verfahren gleichmäßig modifiziert werden kann. Prinzipiell können als polymere Additive alle Polymere eingesetzt werden, die der Fachmann als Pigmentdispergatoren (vergleiche Kirk-Othmer "Encyclopedia of Chemical Technology", Vol. 7, third Edition, 1979, Seiten 840-841 oder Ullmann's "Encyclopedia of Industrial Chemistry", Vol A8, 5th Edition, 1987, Seiten 586-601) kennt, sofern sie die Vorraussetzungen der Löslichkeit und des Molekulargewichts erfüllen. Bevorzugt werden als polymere Additive Acrylsäure- und Methacrylsäurehomo- und copolymere, Ligninsulfonate und Trimerfettsäuren. Insbesondere geeignet sind polymere Additive ausgewählt aus der Gruppe Polymere von Acrylsäure und Methacrylsäure sowie deren Copolymere mit sulfonsäuregruppenhaltigen ungesättigten Monomeren, phosphonsäuregruppenhaltigen ungesättigten Monomeren, ungesättigten aliphatischen Carbonsäuren mit 3 bis 5 C-Atomen, Amiden von ungesättigten aliphatischen Carbonsäuren mit 3 bis 5 C-Atomen, aminogruppenhaltigen ungesättigten Monomeren und/oder deren Salze, Vinylacetat, Vinylchlorid, Acrylnitril, Vinylidenchlorid, 1,3-Butadien, Styrol, Alkylstyrolen mit 1 bis 4 C-Atomen im Alkylrest. Beispiele dafür sind Polyacrylsäure, Polymethacrylsäure - im folgenden werden Acrylsäure und Methacrylsäure sowie deren Derivate vereinfacht als (Meth)acrylsäure bzw. Derivate abgekürzt -und/oder deren Salze wie Polynatrium(meth)acrylat, Copolymere von (Meth)acrylsäure mit Maleinsäure, Maleinsäureanhydrid, Styrolsulfonsäure, α-Methylstyrol, 2-Vinylpyridin, 1-Vinylimidazol, Dimethylaminopropyl(meth)acrylamid, 2-(Meth)acrylamido-2-methylpropansulfonsäure, (Meth)acrylamid, N-Hydroxydimethyl(metha)acrylamid und/oder deren Salze. Ganz besonders bevorzugt unter den polymeren Additiven sind solche, die einen überwiegend anionischen Charakter aufweisen, das heißt, die mehrheitlich Säuregruppen frei oder in Form ihrer Salze tragen. Insbesondere bevorzugt sind Polymere von (Meth)acrylsäure sowie deren Copolymerisate mit Styrol, Alkylstyrolen mit 1 bis 4 C-Atomen im Alkylrest, Styrolsulfonsäure, Maleinsäure und/oder deren Salze, insbesondere deren Natriumsalze und Maleinsäureanhydrid. Zweckmäßigerweise besitzen die polymeren Additiven ein Molekulargewicht von 1000 bis 10000. Die Herstellung der polymeren Additive kann nach bekannten Verfahren wie Substanz- oder Lösungsmittelpolymerisation erfolgen (vergleiche Ullmann's Encyclopädie der technischen Chemie, Band 19, 4. Auflage, Seiten 2-11, 1980). Verfahren zur Herstellung von Ligninsulfonsäure bzw. deren Salze werden ebenfalls in Ullmann's Encyclopädie der technischen Chemie, Band 16, 4. Auflage, Seiten 254-257, 1978, beschrieben. Trimerfettsäuren sind handelsübliche Produkte, die als Rückstand bei der Dimerfettsäuredestillation anfallen, wie Pripol^{R} 1040 der Fa. Unichema oder Emery^{R} 1000 der Fa. Emery.

Erfindungsgemäß können die kationischen Schichtverbindungen mit einem oder mehreren polymeren Additiven alleine oder in Kombination mit weiteren Additiven modifiziert sein. Als weitere Additive kommen in der Gruppe B) Polyole mit mindestens zwei Hydroxylgruppen und insgesamt 3 bis 30 C-Atomen in Betracht. Beispiele für derartige Polyole sind Diole mit 3 bis 30 C-Atomen, wie Butandiole, Hexandiole, Dodecandiole, und Trimethylolpropan, Pentaerythrit, Glycerin sowie deren technische Oligomerengemische mit durchschnittlichen Kondensationsgraden von 2 bis 10. Ganz besonders bevorzugt werden in dieser Gruppe Polyole mit 3 bis 30 C-Atomen, die alle 3 C-Atome mindestens eine Hydroxylgruppe oder einen Ethersauerstoff tragen, vorzugsweise Glycerin und/oder die technischen Oligoglyceringemische mit durchschnittlichen Kondensationsgraden von 2 bis 10.

Bei den Additiven der Gruppe C) handelt es sich um Ester von teilweise oder vollständig epoxidierten ungesättigten Carbonsäuren mit 6 bis 22 C-Atomen. Geeignete Ester sind Ester von ein-, zwei- und /oder dreiwertigen Alkoholen, die vollständig mit epoxidierten, ungesättigten Carbonsäuren mit 6 bis 22 C-Atomen verestert sind wie Methyl-, 2-Ethylhexyl-, Ethylenglykol, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und praktisch vollständig epoxidierten ungesättigten Carbonsäuren mit 12 bis 22 C-Atomen, und insbesondere Ester von Glycerin mit praktisch vollständig epoxidierten ungesättigten Carbonsäuren mit 12 bis 22 C-Atomen.

Die Carbonsäurekomponente kann sich beispielsweise von der ungesättigten Palmitoleinsäure, Ölsäure, Elaidinsäure, Petroselinsäure, Ricinolsäure, Linolensäure, Gadoleinsäure oder Erucasäure ableiten, die nach bekannten Verfahren epoxidiert werden. Wie in der Fettchemie üblich, können die epoxidierten Carbonsäureglyceride auch technische Gemische darstellen, wie man sie durch Epoxidation von natürlichen ungesättigten Fetten und ungesättigten Ölen erhält. Vorzugsweise wird epoxidiertes Rüböl, epoxidiertes Sojaöl und epoxidiertes Sonnenblumenöl neuer Züchtung eingesetzt.

Bei den Additiven der Gruppe D) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in Zusammenhang mit der Gruppe B) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myrristinsäure, Palmitinsäure, Palmitoleinsäure, Stearinsäure, Ölsäure, Ricinolsäure, Linolsäure, Linolensäure, Behensäure oder Erucasäure eingesetzt. Wie in der Fettchemie üblich, kann die Carbonsäurekomponente auch ein technisches Gemisch darstellen, wie es bei der Druckspaltung von natürlichen Fetten und Ölen anfällt. Bevorzugt werden Partialester von Glycerin und insbesondere von deren technischen Oligoglyceringemischen mit durchschnittlichen Kondensationsgraden von 2 bis 10 und gesättigten und/oder ungesättigten aliphatischen Carbonsäuren mit 6 bis 22 C-Atomen.

Schließlich können gemäß Gruppe E) Alkyl- und Arylphosphite eingesetzt werden, vorzugsweise solche der allgemeinen Formel II 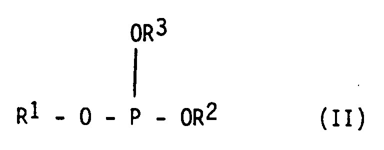 in der R¹, R² und R³ unabhängig voneinander für einen Alkylrest mit 1 bis 18 Kohlenstoffatomen oder einen Phenylrest stehen. Typische Beispiele für Additive der Gruppe E) sind Tributylphosphit, Triphenylphosphit, Dimethylphenylphosphit und/oder Dimethylstearylphosphit. Bevorzugt wird Diphenyldecylphosphit.

Erfindungsgemäß können die polymeren Additive mit einem oder mehreren Additiven der Gruppen B) bis E) zur Modifizierung der kationischen Schichtverbindungen eingesetzt werden, wobei die Gesamtmenge an Additiv in dem Bereich von 0,5 bis 15 Gew.-% - bezogen auf kationische Schichtverbindungen -liegt. Bei Kombinationen von polymeren Additiven mit weiteren Additiven ist es bevorzugt, die polymeren Additive in Mengen von 10 bis 99 Gew.-%, und insbesondere von 30 bis 95 Gew.-% - bezogen auf Gesamtadditivmenge - zu haben.

Ein weiterer Gegenstand der vorliegenden Erfindung sind Verfahren zur Herstellung der erfindungsgemäßen kationischen Schichtverbindungen. Das erste (Verfahren 1.) ist ein Verfahren zur Herstellung von kationischen Schichtverbindungen der allgemeinen Formel I

[M^{(II)}ₓM^{(III)}(OH)_{y}](Aⁿ⁻)_{z} · m H₂O (I)

in der
- M^{(II)}: für mindestens ein zweiwertiges Metallion,
- M^{(III)}: für mindestens ein dreiwertiges Metallion,
- Aⁿ⁻: für ein Säureanion der Ladung n (n = 1, 2 oder 3) stehen und die Bedingungen 1 < x < 5, 0 ≦ z < y, (y + nz) = 2x + 3 und 0 < m < 10 gelten,
mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
ausfällt, trocknet und gegebenenfalls nachtrocknet.

Gemäß dem ersten Verfahren werden die erfindungsgemäßen kationischen Schichtverbindungen in situ hergestellt. Dabei müssen die kationischen Schichtverbindungen mit einer spezifischen Oberfläche nach BET von mindestens 50 m²/g anfallen. Dies kann nach den bereits zitierten gebräuchlichen Verfahren gemäß der deutschen Auslegeschrift DE-B-15 92 126 oder den deutschen Offenlegungsschriften DE-A-20 61 114 oder DE-A-29 05 256 erreicht werden. Zu vermeiden sind auf jeden Fall Umsetzungsbedingungen bei der Herstellung von kationischen Schichtverbindungen, die gemäß der europäischen Patentanmeldung EP-A-189 899 zu Produkten mit spezifischen Oberflächen von kleiner als 30 m²/g führen. Exemplarisch wird im folgenden das Verfahren an dem besonders bevorzugten Hydrotalcit erläutert, der vorzugsweise im Sinne der Erfindung in Anlehnung an die deutsche Patentschrift DE-C-33 06 822 hergestellt wird. Demnach wird Aluminiumhydroxid mit Magnesiumhydroxid und/oder Magnesiumoxid in wäßriger Suspension in Anwesenheit von Carbonationen umgesetzt, wobei gegeben sein muß, daß die polymeren Additive gegebenenfalls in Kombination mit weiteren Additiven der Gruppe B) bis E) zugegen sind. Die Additive können entweder vor oder zusammen mit Magnesiumhydroxid und/oder Magnesiumoxid zu vorgelegtem Aluminiumhydroxid oder vor oder zusammen mit Aluminiumhydroxid zu vorgelegtem Magnesiumhydroxid und/oder Magnesiumoxid gegeben werden. Zweckmäßigerweise werden die Additive zu vorgelegtem Aluminiumhydroxid unter Rühren bei Raumtemperatur (15 bis 25 °C) gegeben, bevor die Umsetzung mit Magnesiumhydroxid und/oder Magnesiumoxid, vorzugsweise nur mit Magnesiumoxid, erfolgt. Zur Beschleunigung der Umsetzung empfehlen sich anschließend Umsetzungstemperaturen von 50 bis 100 °C. Die Einsatzmengen an Aluminium und Magnesium in Form ihrer Hydroxide oder Oxide sowie an Carbonat richtet sich nach gewünschtem Hydrotalcit und ist aus der allgemeinen Formel I ableitbar. Die Carbonationen können in Form ihrer Salze eingebracht werden, vorzugsweise als Magnesiumhydroxidcarbonat. Der bei der Umsetzung gebildete Reaktionsslurry wird anschließend nach einem der bekannten Verfahren getrocknet, vorzugsweise durch Sprühtrocknung. Zweckmäßigerweise wird die Trocknung bei Temperaturen durchgeführt, die den Siedepunkt der Additive nicht um mehr als 10 °C überschreitet, insbesondere gar nicht überschreitet. In einigen Fällen führt eine zusätzliche Entwässerung mittels Nachtrocknung, die vorteilhafter Weise bei Temperaturen zwischen 110 bis 280 °C, beispielsweise in einem Trockenschrank durchgeführt wird, zu verbesserten erfindungsgemäßen kationischen Schichtverbindungen. Nach diesem ersten Verfahren werden kationische Schichtverbindungen erhalten, die mit den bereits beschriebenen Additiven sehr homogen modifiziert sind.

Das zweite Verfahren betrifft die Herstellung von kationischen Schichtverbindungen der allgemeinen Formel I mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
ausfällt, trocknet und gegebenenfalls nachtrocknet und das erhaltene Produkt in Anwesenheit von polaren organischen Lösungsmitteln oder von Wasser mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
vermahlt, trocknet und gegebenenfalls nachtrocknet.

Nach dem zweiten Verfahren (Verfahren 2.) zur Herstellung der erfindungsgemäßen Schichtverbindungen werden zunächst die Schichtverbindungen der Formel I aus wäßrigen Lösungen oder Suspensionen nur in Gegenwart der polymeren Additive analog Verfahren 1. hergestellt, getrocknet und gegebenenfalls nachgetrocknet. Einzelheiten zur Herstellung der mit polymeren Additiven modifizierten kationischen Schichtverbindungen sind unter Verfahren 1. zu entnehmen. Anschließend wird das so erhaltene Produkt in Anwesenheit der bereits beschriebenen polaren organischen Lösungsmitteln oder in Anwesenheit von Wasser mit einem oder mehreren Additiven ausgewählt aus den Gruppen B) bis E) innigst vermahlen, vorzugsweise mit Mahlkörpermühlen und insbesondere mit einer Kugelmühle. Daraufhin wird auf herkömmliche Weise getrocknet, vorzugsweise bei Temperaturen nicht über 10 °C über den Siedepunkten der Additive und gegebenenfalls wie unter Verfahren 1. beschrieben nachgetrocknet.

Das dritte Verfahren betrifft die Herstellung von kationischen Schichtverbindungen der allgemeinen Formel I mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
ausfällt, trocknet, gegebenenfalls nachtrocknet, und das erhaltene Produkt in Anwesenheit von polaren organischen Lösungsmitteln oder von Wasser mit einem oder mehreren polymeren Additiven, die in polaren organischen Lösungsmitteln und/oder in Wasser mit pH-Werten über 8 gelöst sind und ein Molekulargewicht von 500 bis 50000 besitzen, vermahlt, trocknet und gegebenenfalls nachtrocknet.

Nach dem weiteren Verfahren (Verfahren 3.) werden zunächst Schichtverbindungen der Formel I aus wäßrigen Lösungen oder Suspensionen ausschließlich in Gegenwart von Additiven der Gruppe B) bis E) in Anlehnung an Verfahren 1. hergestellt. Das erhaltene Produkt wird anschließend in Anwesenheit von den bereits beschriebenen polaren organischen Lösungsmitteln oder von Wasser mit einem oder mehreren der beschriebenen polymeren Additive vermahlt, getrocknet und gegebenenfalls nachgetrocknet. Das Vermahlen erfolgt analog zur Verfahrensvariante 2. Die Trocknung und die Nachtrocknung wurden ebenfalls bereits beschrieben.

Das vierte Verfahren betrifft die Herstellung von kationischen Schichtverbindungen der allgemeinen Formel I mit einer spezifischen Oberfläche nach BET von mindestens 50 m²/g und modifiziert mit Additiven, dadurch gekennzeichnet, daß man Schichtverbindungen der Formel I in Anwesenheit von polaren organischen Lösungsmitteln oder von Wasser mit
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
vermahlt, trocknet und gegebenenfalls nachtrocknet.

Nach dem vierten Verfahren (Verfahren 4.) werden kationische Schichtverbindungen mit einer spezifischen Oberfläche von größer 50 m²/g in Anwesenheit von den bereits beschriebenen polaren organischen Lösungsmitteln oder in Anwesenheit von Wasser mit den polymeren Additiven A) alleine oder in Kombination mit Additiven aus den Gruppen B) bis E) innigst vermahlen, vorzugsweise mit Mahlkörpermühlen und insbesondere mit einer Kugelmühle, anschließend auf herkömmliche Weise getrocknet, vorzugsweise in einem Vakuumtrockenschrank und gegebenenfalls wie beschrieben nachgetrocknet. Die kationischen Schichtverbindungen, die für Verfahren 4. eingesetzt werden können, sind entweder herkömmliche schon beschriebene nicht modifizierte kationische Schichtverbindungen und/oder kationische Schichtverbindungen, die mit Additiven der Gruppe B) bis E) bei der Ausfällung der kationischen Schichtverbindungen aus wäßriger Lösung oder Suspension modifiziert wurden gemäß erstem Verfahrensschritt des Verfahrens 1.

Nach den Verfahren 1. bis 4. werden die polymeren Additive A) alleine oder in Kombination mit einem oder mehreren Additiven aus den Gruppen B) bis E) in Mengen von 0,5 bis 15 Gew.-% - bezogen auf kationische Schichtverbindungen - zugegeben. Werden die polymeren Additive in Kombination mit weiteren Additiven der Gruppe B) bis E) eingesetzt, so beträgt die Menge an polymeren Additiven A vorzugsweise 10 Gew.-% bis 99 Gew.-% und insbesondere 30 bis 95 Gew.-% - bezogen auf Gesamtadditivmenge. Wenn gewünscht können die nach Verfahren 1. erhaltenen kationischen Schichtverbindungen anschließend mit mindestens einem flüssigen oder niedrig schmelzenden, dispergierend wirkenden Additiv ausgewählt aus der Gruppe B) bis C) durch intensives Vermischen bei Raumtemperatur (15 bis 25 °C) oder einer Temperatur unterhalb der Zersetzungstemperaturen der kationischen Schichtverbindungen und/oder der Additive, vorzugsweise unterhalb 300 °C modifiziert werden. Unter dem Ausdruck der niedrig schmelzenden Additive werden solche Additive verstanden, die unter den obigen Zersetzungstemperaturen bei Normaldruck in den flüssigen Zustand überführt werden können. Sollen die kationischen Schichtverbindungen hergestellt nach Verfahren 1. auf diese Weise modifiziert werden, so können zusätzlich zu den angegebenen Additivmengen insgesamt 3 bis 100 Gew.-% - bezogen auf kationische Schichtverbindungen - der Additive B) bis E) zugegen sein.

Ein weiterer Gegenstand der vorliegenden Erfindung ist die Verwendung von kationischen Schichtverbindungen der beschriebenen Art als Co-Stabilisatoren für mit Calcium- und/oder Zinksalzen von Carbonsäuren mit 6 bis 22 C-Atomen stabilisierte halogenhaltige Kunststoffe. Bevorzugt werden die erfindungsgemäßen kationischen Schichtverbindungen als Co-Stabilisatoren in halogenhaltigen Kunststoffen und insbesondere in PVC eingesetzt. Dazu werden die kationischen Schichtverbindungen mit modifizierter Oberfläche in Mengen von 0,01 bis 5, vorzugsweise 0,1 bis 3 Gew.-Teile - auf 100 Gew.-Teile Kunststoffe - zugesetzt. In der Regel werden sie mit den in Granulatform vorliegenden Kunststoffen mechanisch vermischt, bevor die Verformung, beispielsweise im Kalander- und Extrusionsverfahren durchgeführt wird. Meistens gleichzeitig mit den kationischen Schichtverbindungen modifizierter Oberfläche werden die handelsüblichen Zink- und/oder Calciumsalze von Carbonsäuren mit 6 bis 22 C-Atomen als übliche Stabilisatoren eingemischt. Selbstverständlich können auch weitere konventionelle Additive, wie die in der europäischen Anmeldung EP-A-189 899 beschriebenen Hitzestabilisatoren eingesetzt werden. Die Mengen der Stabilisatoren und Co-Stabilisatoren (modifizierte kationische Schichtverbindung) untereinander können beliebig variieren, mit der Maßgabe, daß der Gesamtstabilisatorzusatz innerhalb der Mengengrenze von 0,5 bis 5 Gew.-Teilen - auf 100 Gew.-Teile Kunstharz - liegt. Die Mindestmenge an modifizierten kationischen Schichtverbindungen beträgt demgemäß mindestens 0,01 Gew.-Teile auf 100 Gew.-Teile Kunstharz.

Durch die Verwendung der erfindungsgemäßen kationischen Schichtverbindungen wird die Wirkung von Zink- und/oder Calciumseifen bei der Stabilisierung der halogenhaltigen Kunststoffe verbessert. Zudem sind die modifizierten kationischen Schichtverbindungen als Co-Stabilisatoren hervorragend in den halogenhaltigen Kuststoffen einarbeitbar, ohne die Rheologie der Kunststoffe zu beeinträchtigen.

### Beispiele

### A) Herstellung der modifizierten kationischen Schichtverbindungen

### Beispiel 1: Additivzugabe bei Bildung der kationischen Schichtverbindung

300 g eines Aluminiumhydroxid-Gels mit einem Aluminiumgehalt von 0,56 Mol wurden mit 800 g vollentionisiertem Wasser (VE-Wasser) bei Zimmertemperatur verrührt. Dazu wurden die in Tabelle 1 angegebenen Additive bzw. Additivgemische in dort angegebenen Mengen zugegeben und die Mischung auf 80 °C erwärmt. Bei dieser Temperatur wurden 61,6 g Magnesiumhydroxidcarbonat, entsprechend 0,64 Mol Magnesium, und 17,6 g Magnesiumoxid, entsprechend 0,44 Mol Magnesium, als Pulver beigegeben. Die Mischung wurde 2 Stunden unter Rückfluß gerührt und nach Abkühlung direkt mit dem Labor-Sprühtrockner der Firma Büchi (Lufteintrittstemperatur 130 bis 160 °C, Austrittstemperatur 100 bis 105 °C) sprühgetrocknet. In einigen Fällen wurde das pulverförmige sprühgetrocknete Produkt in einem Labortrockenschrank nachgetrocknet für 2 Stunden.

In Tabelle 1 sind die Additive bzw. Additivgemische zusammengestellt. Die Mengenangabe der Additive bedeuten Gewichtsprozent bezogen auf die theoretische Ausbeute an kationischer Schichtverbindung der Formel [Mg₄ Al₂ (OH)₁₂] (CO₃) · 4 H₂O. Die Temperaturangabe bezieht sich auf die Temperatur der Nachtrocknung in °C.

Als polymeres Additiv wurde ein Copolymerisat aus 46 Gew.-% Styrol, 23 Gew.-% α-Methylstyrol und 31 Gew.-% Acrylsäure mit einem Molekulargewicht (Gewichtsmittel) von 6000 (Copolymerisat 1) eingesetzt.

**Tabelle 1**

| Kationische Schichtverbindung modifiziert mit | | | |
|---|---|---|---|
| Bsp. | Additiv | Menge | Nachtrocknung in °C |
| 1a | Copolymerisat 1 | 2,2 | - |
| 1b | Copolymeriat 1 | 2,2 | 200 |
| 1c | Copolymerisat 1 | 2,2 | |
| | und | | 200 |
| | epoxidiertes Sojaöl (Verseifungszahl VZ 125, Epoxidsauerstoffgehalt EO 5,8 Gew.-%) | 2,2 | |
| 1d | Copolymerisat 1 | 2,2 | |
| | und | | 200 |
| | Glycerin | 2,2 | |
| 1e | Copolymerisat 1 | 2,2 | |
| | und | | 200 |
| | epoxidiertes Sojaöl (VZ 125; EO 5,8) und | 2,2 | |
| | Glycerin | 2,2 | |

### Beispiel 2: Vermahlen der kationischen Schichtverbindungen mit Additiven

Als kationische Schichtverbindung wurde Hydrotalcit Typ C300 der Fa. Guilini mit einer spezifischen Oberfläche nach BET von 115 m²/g eingesetzt. 19,4 g des Hydrotalcits wurden
2a) mit Copolymerisat 1 aus Bsp. 1 und 80 g voll entsalztem Wasser
2b) mit Copolymerisat 1 aus Bsp. 1 und 0,6 g epoxidiertem Sojaöl (VZ 125; EO 5,8) und 80 g voll entsalztem Wasser
2c) mit 1 g einer 60 gew.-%igen Lösung von einem Copolymer aus 95 Gew.-% Methylacrylat und 5 Gew.-% Dimethylaminopropylmethacrylamid (MG 5000) in Xylol und 60 g Ethylmethylketon
in einer Glaskugelmühle eine Stunde vermahlen. Anschließend wurden die Glaskugeln abgesiebt und der Feststoff abfiltriert. Der modifizierte Hydrotalcit wurde dann bei 75 °C im Vakuumtrockenschrank getrocknet, pulverisiert und für 2 Stunden im Trockenschrank bei 200 °C nachgetrocknet.

### Beispiel 3: Vermahlen vorher modifizierten kationischen Schichtverbindungen mit Additiven

300 g des Aluminiumhydroxid-Gels nach Beispiel 1 wurden bei Zimmertemperatur mit 800 g voll entsalztem Wasser verrührt, mit 2,5 g Glycerin versetzt und unter Rühren auf 80 °C erwärmt. Analog Beispiel 1 wurde zu dieser Mischung 61,6 g Magnesiumhydroxidcarbonat und 17,6 g Magnesiumoxid zugegeben und wie in Beispiel 1 weiterbearbeitet. Man erhielt ein pulverförmiges sprühgetrocknetes Produkt mit einer spezifischen Oberfläche nach BET von 96 m²/g, welches anschließend in einem Trockenschrank bei 200 °C 2 Stunden nachgetrocknet wurde.

19,4 g dieses Produktes wurden analog Beispiel 2 mit 0,6 g Copolymerisat 1, 0,6 g epoxidiertes Sojaöl (VZ 125; EO 5,8) und 80 g voll entsalztem Wasser in einer Glaskugelmühle vermahlen. In Anlehnung an Beispiel 2 wurden anschließend die Glaskugeln abgesiebt, der Feststoff filtriert und mit voll entsalztem Wasser nachgewaschen. Der so modifizierte Hydrotalcit wurde dann bei 110 °C im Umlufttrockenschrank getrocknet, pulverisiert und bei 200 °C für 2 Stunden im Trockenschrank nachgetrocknet.

### Vergleichssubstanzen

### V 1

"Alcamizer^{R} 4", kommerzieller PVC-Stabilisator auf Basis von Hydrotalcit der Firma Kyowa Chemical Ind. mit einer spezifischen Oberfläche nach BET von 8 m²/g (vgl. "Introduction of Alcamizer", Kyowa Chem. Ind. Co. Ltd. Seiten 2-36, Isuriganecho, Higashi-Ku, Osaka).

### V 2

Sprühgetrockneter Hydrotalcit, hergestellt analog Beispiel 1, jedoch ohne Additivzugabe und ohne Nachtrocknung.

### V 3

Sprühgetrockneter Hydrotalcit, hergestellt analog Beispiel 1, jedoch ohne Additivzugabe. Dieser Hydrotalcit wurde nach der Sprühtrockung 2 Stunden in einem Labortrocknungsschrank bei 200 °C nachgetrocknet.

### V 4

19,4 g Hydrotalcit Type C 300 der Firma Giulini Chemie GmbH (BET 115 m²/g) wurden mit 0,6 g Copolymerisat 1 und mit 80 g voll entsalztem Wasser bei 80 °C für zwei Stunden ohne Mahlung verrührt. Der Feststoff wurde abfiltriert und die ungelösten Partikel des Copolymerisat 1 mechanisch ausgelesen. Anschließend wurde der Feststoff bei 75 °C im Vakuumtrockenschrank getrocknet, pulverisiert und für 2 Stunden bei 200 °C nachgetrocknet.

### B) Anwendungstechnische Beispiele

Untersucht wurde die "statische Stabilität" von Walzfellen, die versetzt waren mit Stabilisatorgemischen aus (Gew.-Teile = Gewichtsteile):
- 0,5 Gew.-Teile: Zinkstearat
- 0,5 Gew.-Teile: Calciumstearat
- 0,2 Gew.-Teile: Stearoylbenzoylmethan (Rhodiastab^{R} 50)
- 1,0 Gew.-Teile: der erfindungsgemäßen Substanzen nach Beispiel 1, 2, 3 und der Vergleichssubstanzen 1 bis 4
auf 100 Gew.-Teile-Suspensions-Polyvinylchlorid mit einem K-Wert von 65.

Zu diesem Zweck wurden Stabilisatorgemische enthaltende Polyvinylchlorid-Formmassen auf einem Laborwalzwerk der Abmessung 450 x 220 mm (Fa. Berstorff) bei einer Walzentemperatur von 170 °C und einer Walzendrehzahl von 12,5 Upm im Gleichlauf zu Prüffellen verarbeitet. Die ca. 0,5 mm dicken Felle wurden zu quadratischen Probestücken mit 10 mm Kantenlänge zerschnitten, die anschließend in einem Trockenschrank mit sechs rotierenden Horden (Heraeus FT 420 R) einer Temperatur von 180 °C ausgesetzt wurden. Im Abstand von 15 min wurden Proben entnommen und deren Farbveränderung begutachtet. Die Verfärbung wurde durch die Notenstufen 1 (farblos) bis 10 (schwarz, Stabilitätsabbruch) charakterisiert.

Die Ergebnisse sind in Tabelle 2 zusammengefaßt.

**Tabelle 2**

| Stabilität der PVC-Formmassen | | | | | | | | | | |
|---|---|---|---|---|---|---|---|---|---|---|
| Beispiel | Additiv gemäß Beispiel | Farbnote nach Minuten | | | | | | | | |
| | | 0 | 15 | 30 | 45 | 60 | 75 | 90 | 105 | 120 |
| A | 1a | 1 | 1 | 2 | 3 | 4 | 7 | 10 | | |
| B | 1b | 1 | 1 | 2 | 3 | 4 | 7 | 9 | 10 | |
| C | 1c | 1 | 1 | 2 | 2 | 4 | 6 | 10 | | |
| D | 1d | 1 | 2 | 2 | 3 | 4 | 6 | 8 | 9 | 10 |
| E | 1e | 1 | 2 | 2 | 3 | 5 | 7 | 8 | 10 | |
| F | 2a | 1,5 | 2 | 3 | 5 | 8 | 10 | | | |
| G | 2b | 1 | 2 | 2 | 5 | 7 | 9 | 10 | | |
| H | 2c | 1 | 2 | 3 | 5 | 7 | 9 | 10 | | |
| I | 3 | 1,5 | 2 | 3 | 4 | 5 | 6 | 7 | 8 | 10 |
| J | V1 | 1 | 2 | 3 | 5 | 7 | 10 | | | |
| K | V2 | 1,5 | 2 | 4 | 8 | 10 | | | | |
| L | V3 | 1 | 2 | 4 | 8 | 10 | | | | |
| M | V4 | 2 | 3 | 4 | 7 | 10 | | | | |

## Patentansprüche

1. Kationische Schichtverbindungen der allgemeinen Formel I
[M^{(II)}ₓM^{(III)}(OH)_{y}](Aⁿ⁻)_{z} · m H₂O (I)
in der
M^{(II)} für mindestens ein zweiwertiges Metallion,
M^{(III)} für mindestens ein dreiwertiges Metallion,
Aⁿ⁻ für ein Säureanion der Ladung n (n = 1, 2 oder 3) stehen und die Bedingungen 1 < x < 5, 0 < z < y , (y + nz) = 2x + 3
und 0 < m < 10 gelten,
mit einer spezifischen Oberfläche nach BET von mindestens 50 m²/g und modifiziert mit Additiven, dadurch gekennzeichnet, daß sie
A) mit einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
modifiziert sind,
- indem man Schichtverbindungen der Formel I aus wäßrigen Lösungen oder Suspensionen, die die Ionen M^{(II)}, M^{(III)} und Aⁿ⁻ enthalten, in Gegenwart von einem oder mehren polymeren Additiven A) alleine oder in Kombination mit einem oder mehreren Additiven ausgewählt aus den Gruppen B) bis E) ausfällt, trocknet und gegebenenfalls nachtrocknet oder
- indem man Schichtverbindungen der Formel (I) in Anwesenheit von Lösungsmitteln oder von Wasser mit einem oder mehreren polymeren Additiven A) alleine oder in Kombination mit einem oder mehreren Additiven ausgewählt aus den Gruppen B) bis E) vermahlt, trocknet und gegebenfalls nachtrocknet.

2. Kationische Schichtverbindungen nach Anspruch 1, dadurch gekennzeichnet, daß in der allgemeinen Formel I M^{(II)} für ein zweiwertiges Magnesiumion oder M^{(III)} für ein dreiwertiges Aluminiumion oder Aⁿ⁻ für ein Carbonation steht.

3. Kationische Schichtverbindungen nach einem der Ansprüche 1 oder 2, dadurch gekennzeichnet, daß die Schichtverbindungen der allgemeinen Formel I Hydrotalcite sind.

4. Kationische Schichtverbindungen nach einem der Ansprüche 1 bis 3, dadurch gekennzeichnet, daß sie modifiziert sind mit einem oder mehreren polymeren Additiven ausgewählt aus der Gruppe Acrylsäure- und Methacrylsäurehomo- und copolymere, Ligninsulfonate und Trimerfettsäuren.

5. Kationische Schichtverbindungen nach einem der Ansprüche 1 bis 4, dadurch gekennzeichnet, daß sie modifiziert sind mit einem oder mehreren polymeren Additiven ausgewählt aus der Gruppe
Polymere von Acrylsäure und Methacrylsäure sowie deren Copolymere mit sulfonsäuregruppenhaltigen ungesättigten Monomeren, phosphonsäuregruppenhaltigen ungesättigten Monomeren, ungesättigten, aliphatischen Carbonsäuren mit 3 bis 5 C-Atomen, Amiden von ungesättigten, aliphatischen Carbonsäuren mit 3 bis 5 C-Atomen, aminogruppenhaltigen ungesättigten Monomeren und/oder deren Salze, Vinylacetat, Vinylchlorid, Acrylnitril, Vinylidenchlorid, 1-3 Butandien, Styrol und Alkylstyrolen mit 1 bis 4 C-Atomen im Alkylrest.

6. Kationische Schichtverbindungen nach einem der Ansprüche 1 bis 5, dadurch gekennzeichnet, daß sie modifiziert sind mit einem polymeren Additiv ausgewählt aus der Gruppe
Polymere von Acrylsäure und Methacrylsäure sowie deren Copolymerisate mit Styrol, Alkylstyrolen mit 1 bis 4 C-Atomen im Alkylrest, Styrolsulfonsäure, Maleinsäure und/oder deren Salze und Maleinsäureanhydrid.

7. Kationische Schichtverbindungen nach einem der Ansprüche 1 bis 6, dadurch gekennzeichnet, daß sie modifiziert sind mit polymeren Additiven mit Molekulargewichten von 1000 bis 10000.

8. Kationische Schichtverbindungen nach einem der Ansprüche 1 bis 7, dadurch gekennzeichnet, daß sie modifiziert sind mit einem oder mehreren polymeren Additiven in Kombination mit einem oder mehreren Additiven der Gruppe
Polyole mit 3 bis 30 C-Atomen, die pro 3 C-Atome mindestens eine Hydroxylgruppe oder ein Ethersauerstoff tragen, vorzugsweise Glycerin und/oder technische Oligoglyceringemische mit durchschnittlichen Kondensationsgraden von 2 bis 10.

9. Kationische Schichtverbindungen nach einem der Ansprüche 1 bis 8, dadurch gekennzeichnet, daß sie modifiziert sind mit einem oder mehreren polymeren Additiven in Kombination mit einem oder mehreren Additiven der Gruppe
Ester von dreiwertigen Alkoholen und vollständig epoxidierten ungesättigten Carbonsäuren mit 12 bis 22 C-Atomen, vorzugsweise Ester von Glycerin und insbesondere epoxidiertes Sojaöl, epoxidiertes Rüböl und epoxidiertes Sonnenblumenöl.

10. Kationische Schichtverbindungen nach einem der Ansprüche 1 bis 9, dadurch gekennzeichnet, daß sie modifiziert sind mit einem oder mehreren polymeren Additiven in Kombination mit einem oder mehreren Additiven der Gruppe
Partialester von Glycerin, von technischen Oligoglyceringemischen mit durchschnittlichen Kondensationsgraden von 2 bis 10 und gesättigten und/oder ungesättigten aliphatischen Carbonsäuren mit 6 bis 22 C-Atomen.

11. Kationische Schichtverbindungen nach einem der Ansprüche 1 bis 10, dadurch gekennzeichnet, daß sie die polymeren Additive alleine oder in Kombination mit einem oder mehreren Additiven aus den Gruppen B) bis E) in Mengen von 0,5 bis 15 Gew.-% - bezogen auf kationische Schichtverbindung - enthalten, wobei die polymeren Additive in Kombination mit den weiteren Additiven, vorzugsweise in Mengen von 10 bis 99 Gew.-% und insbesondere 30 bis 95 Gew.-% - bezogen auf Gesamtadditivmenge - eingesetzt werden.

12. Verfahren zur Herstellung von kationischen Schichtverbindungen der allgemeinen Formel I
[M^{(II)}ₓM^{(III)}(OH)_{y}](Aⁿ⁻)_{z} · m H₂O (I)
in der
M^{(II)} für mindestens ein zweiwertiges Metallion,
M^{(III)} für mindestens ein dreiwertiges Metallion,
Aⁿ⁻ für ein Säureanion der Ladung n (n = 1, 2 oder 3) stehen und die Bedingungen 1 < x < 5, 0 < z < y, (y + nz) = 2x + 3
und 0 < m < 10 gelten,
mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
ausfällt, trocknet und gegebenenfalls nachtrocknet.

13. Verfahren zur Herstellung von kationischen Schichtverbindungen der allgemeinen Formel I
[M^{(II)}ₓM^{(III)}(OH)_{y}](Aⁿ⁻)_{z} · m H₂O (I)
in der
M^{(II)} für mindestens ein zweiwertiges Metallion,
M^{(III)} für mindestens ein dreiwertiges Metallion,
Aⁿ⁻ für ein Säureanion der Ladung n (n = 1, 2 oder 3) stehen und die Bedingungen 1 < x < 5, 0 < z < y, (y + nz) = 2x + 3
und 0 < m < 10 gelten,
mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
ausfällt, trocknet und gegebenenfalls nachtrocknet und das erhaltene Produkt in Anwesenheit von polaren organischen Lösungsmitteln oder von Wasser mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
vermahlt, trocknet und gegebenenfalls nachtrocknet.

14. Verfahren zur Herstellung von kationischen Schichtverbindungen der allgemeinen Formel I
[M^{(II)}ₓM^{(III)}(OH)_{y}](Aⁿ⁻)_{z} · m H₂O (I)
in der
M^{(II)} für mindestens ein zweiwertiges Metallion,
M^{(III)} für mindestens ein dreiwertiges Metallion,
Aⁿ⁻ für ein Säureanion der Ladung n (n = 1, 2 oder 3) stehen und die Bedingungen 1 < x < 5, 0 < z < y, (y + nz) = 2x + 3
und 0 < m < 10 gelten,
mit einer spezifischen Oberfläche nach BET von mindestens 50 m²/g und modifiziert mit Additiven, dadurch gekennzeichnet, daß man Schichtverbindungen der Formel I aus wäßrigen Lösungen oder Suspensionen, die die Ionen M^{(II)}, M^{(III)} und Aⁿ⁻ enthalten in Gegenwart von
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
ausfällt, trocknet, gegebenenfalls nachtrocknet, und das erhaltene Produkt in Anwesenheit von polaren organischen Lösungsmitteln oder von Wasser mit einem oder mehreren polymeren Additiven, die in polaren organischen Lösungsmitteln und/oder in Wasser mit pH-Werten über 8 gelöst sind und ein Molekulargewicht von 500 bis 50000 besitzen, vermahlt, trocknet und gegebenenfalls nachtrocknet.

15. Verfahren zur Herstellung von kationischen Schichtverbindungen der allgemeinen Formel I
[M^{(II)}ₓM^{(III)}(OH)_{y}](Aⁿ⁻)_{z} · m H₂O (I)
in der
M^{(II)} für mindestens ein zweiwertiges Metallion,
M^{(III)} für mindestens ein dreiwertiges Metallion,
Aⁿ⁻ für ein Säureanion der Ladung n (n = 1, 2 oder 3) stehen und die Bedingungen 1 < x < 5, 0 < z < y, (y + nz) = 2x + 3
und 0 < m < 10 gelten,
mit einer spezifischen Oberfläche nach BET von mindestens 50 m²/g und modifiziert mit Additiven, dadurch gekennzeichnet, daß man Schichtverbindungen der Formel I in Anwesenheit von polaren organischen Lösungsmitteln oder von Wasser mit
A) einem oder mehreren polymeren Additiven, die in polaren organischen Lösungsmitteln und/oder in Wasser mit pH-Werten über 8 gelöst sind und ein Molekulargewicht von 500 bis 50000 besitzen,
alleine oder in Kombination mit einem oder mehreren Additiven, ausgewählt aus den Gruppen
B) Polyole mit 3 bis 30 C-Atomen und mindestens 2 Hydroxylgruppen und
C) Ester von teilweise und vollständig epoxidierten ungesättigten Carbonsäuren mit 6 bis 22 C-Atomen und
D) Voll- und Partialester von Polyolen mit 3 bis 30 C-Atomen und 2 bis 12 Hydroxylgruppen mit Carbonsäuren mit 6 bis 22 C-Atomen und
E) Alkyl- und Arylphosphite
vermahlt, trocknet und gegebenenfalls nachtrocknet.

16. Verwendung von kationischen Schichtverbindungen nach einem der Ansprüche 1 bis 11 als Co-Stabilisatoren für mit Calcium und/oder Zinksalzen von Carbonsäuren mit 6 bis 22 C-Atomen stabilisierte halogenhaltige Kunststoffe.

17. Verwendung von kationischen Schichtverbindungen nach einem der Ansprüche 12 bis 15 als Co-Stabilisatoren für mit Calcium- und/oder Zinksalzen von Carbonsäuren mit 6 bis 22 C-Atomen stabilisierte halogenhaltige Kunststoffe.

## Claims

1. Cationic layer compounds corresponding to general formula I:
[M^{(II)}ₓM^{(III)}(OH)_{y}](Aⁿ⁻)_{z} · mH₂O (I)
in which
M^{(II)} represents at least one divalent metal ion,
M^{(III)} represents at least one trivalent metal ion,
Aⁿ⁻ represents an acid anion having a charge n (n = 1, 2 or 3),
with the proviso that 1 < x < 5, 0 < z < y, (y + nz) = 2x + 3 and 0 < m < 10,
which have a specific BET surface of at least 50 m²/g and which are modified with additives, characterized in that they are modified
A) with one or more polymeric additives which are dissolved in polar organic solvents and/or in water having pH values above 8 and which have a molecular weight of 500 to 50,000,
on their own or in combination with one or more additives selected from the following groups:
B) polyols containing 3 to 30 carbon atoms and at least 2 hydroxyl groups,
C) esters of partly and completely epoxidized unsaturated carboxylic acids containing 6 to 22 carbon atoms,
D) full and partial esters of polyols containing 3 to 30 carbon atoms and 2 to 12 hydroxyl groups with carboxylic acids containing 6 to 22 carbon atoms and
E) alkyl and aryl phosphites
- by precipitating layer compounds of formula I from aqueous solutions or suspensions containing the ions M^{(II)}, M^{(III)} and Aⁿ⁻ in the presence of one or more polymeric additives A) either on their own or in combination with one or more additives selected from groups B) to E), drying and optionally redrying the compounds precipitated or
- by grinding layer compounds of formula (I) with one or more polymeric additives A) either on their own or in combination with one or more additives selected from groups B) to E) in the presence of solvents or water, drying and optionally redrying the ground product.

2. Cationic layer compounds as claimed in claim 1, characterized in that, in general formula I, M^{(II)} represents a divalent magnesium ion or M^{(III)} represents a trivalent aluminium ion or Aⁿ⁻ represents a carbonate ion.

3. Cationic layer compounds as claimed in claim 1 or 2, characterized in that the layer compounds corresponding to general formula I are hydrotalcites.

4. Cationic layer compounds as claimed in any of claims 1 to 3, characterized in that they are modified with one or more polymeric additives selected from the group consisting of acrylic acid and methacrylic acid homo- and copolymers, lignin sulfonates and trimer fatty acids.

5. Cationic layer compounds as claimed in any of claims 1 to 4, characterized in that they are modified with one or more polymeric additives selected from the group consisting of
polymers of acrylic and methacrylic acid and copolymers thereof with unsaturated monomers containing sulfonic acid groups, unsaturated monomers containing phosphonic acid groups, unsaturated aliphatic C₃₋₅ carboxylic acids, amides of unsaturated aliphatic C₃₋₅ carboxylic acids, aminofunctional unsaturated monomers and/or salts thereof, vinyl acetate, vinyl chloride, acrylonitrile, vinylidene chloride, 1,3-butadiene, styrene and alkyl styrenes containing 1 to 4 C atoms in the alkyl group.

6. Cationic layer compounds as claimed in any of claims 1 to 5, characterized in that they are modified with a polymeric additive selected from the group consisting of
polymers of acrylic acid and methacrylic acid and copolymers thereof with styrene, alkyl styrenes containing 1 to 4 C atoms in the alkyl group, styrene sulfonic acid, maleic acid and/or salts thereof and maleic anhydride.

7. Cationic layer compounds as claimed in any of claims 1 to 6, characterized in that they are modified with polymeric additives having molecular weights of 1,000 to 10,000.

8. Cationic layer compounds as claimed in any of claims 1 to 7, characterized in that they are modified with one or more polymeric additives in combination with one or more additives from the group consisting of
C₃₋₃₀ polyols containing at least one hydroxyl group or an ether oxygen atom for every 3 C atoms, preferably glycerol and/or technical oligoglycerol mixtures having average degrees of condensation of 2 to 10.

9. Cationic layer compounds as claimed in any of claims 1 to 8, characterized in that they are modified with one or more polymeric additives in combination with one or more additives from the group consisting of
esters of trihydric alcohols and completely epoxidized unsaturated C₁₂₋₂₂ carboxylic acids, preferably esters of glycerol and, more particularly, epoxidized soybean oil, epoxidized rapeseed oil and epoxidized sunflower oil.

10. Cationic layer compounds as claimed in any of claims 1 to 9, characterized in that they are modified with one or more polymeric additives in combination with one or more additives from the group consisting of
partial esters of glycerol, technical oligoglycerol mixtures having average degrees of condensation of 2 to 10 and saturated and/or unsaturated aliphatic C₆₋₂₂ carboxylic acids.

11. Cationic layer compounds as claimed in any of claims 1 to 10, characterized in that they contain the polymeric additives on their own or in combination with one or more additives from groups B) to E) in quantities of 0.5 to 15% by weight, based on cationic layer compound, the polymeric additives being used in combination with the other additives preferably in quantities of 10 to 99% by weight and more preferably in quantities of 30 to 95% by weight, based on the total quantity of additives.

12. A process for the production of cationic layer compounds corresponding to general formula I:
[M^{(II)}ₓM^{(III)}(OH)_{y}](Aⁿ⁻)_{z} · mH₂O (I)
in which
M^{(II)} represents at least one divalent metal ion,
M^{(III)} represents at least one trivalent metal ion,
Aⁿ⁻ represents an acid anion having a charge n (n = 1, 2 or 3),
with the proviso that 1 < x < 5, 0 ≦ z < y, (y + nz) = 2x + 3 and 0 < m < 10,
which have a specific BET surface of at least 50 m²/g and which are modified with additives, characterized in that layer compounds corresponding to formula I are precipitated from aqueous solutions or suspensions containing the ions M^{(II)}, M^{(III)} and Aⁿ⁻ in the presence of
A) one or more polymeric additives which are dissolved in polar organic solvents and/or in water having pH values above 8 and which have a molecular weight of 500 to 50,000,
on their own or in combination with one or more additives selected from the following groups:
B) polyols containing 3 to 30 carbon atoms and at least 2 hydroxyl groups,
C) esters of partly and completely epoxidized unsaturated carboxylic acids containing 6 to 22 carbon atoms,
D) full and partial esters of polyols containing 3 to 30 carbon atoms and 2 to 12 hydroxyl groups with carboxylic acids containing 6 to 22 carbon atoms and
E) alkyl and aryl phosphites,
dried and optionally redried.

13. A process for the production of cationic layer compounds corresponding to formula I:
[M^{(II)}ₓM^{(III)}(OH)_{y}](Aⁿ⁻)_{z} · mH₂O (I)
in which
M^{(II)} represents at least one divalent metal ion,
M^{(III)} represents at least one trivalent metal ion,
Aⁿ⁻ represents an acid anion having a charge n (n = 1, 2 or 3),
with the proviso that 1 < x < 5, 0 ≦ z < y, (y + nz) = 2x + 3 and 0 < m < 10,
which have a specific BET surface of at least 50 m²/g and which are modified with additives, characterized in that layer compounds corresponding to formula I are precipitated from aqueous solutions or suspensions containing the ions M^{(II)}, M^{(III)} and Aⁿ⁻ in the presence of
A) one or more polymeric additives which are dissolved in polar organic solvents and/or in water having pH values above 8 and which have a molecular weight of 500 to 50,000,
dried and optionally redried and the product obtained is ground in the presence of polar organic solvents or water containing one or more additives selected from the following groups:
B) polyols containing 3 to 30 carbon atoms and at least 2 hydroxyl groups,
C) esters of partly and completely epoxidized unsaturated carboxylic acids containing 6 to 22 carbon atoms,
D) full and partial esters of polyols containing 3 to 30 carbon atoms and 2 to 12 hydroxyl groups with carboxylic acids containing 6 to 22 carbon atoms and
E) alkyl and aryl phosphites,
dried and optionally redried.

14. A process for the production of cationic layer compounds corresponding to general formula I:
[M^{(II)}ₓM^{(III)}(OH)_{y}](Aⁿ⁻)_{z} · mH₂O (I)
in which
M^{(II)} represents at least one divalent metal ion,
M^{(III)} represents at least one trivalent metal ion,
Aⁿ⁻ represents an acid anion having a charge n (n = 1, 2 or 3),
with the proviso that 1 < x < 5, 0 ≦ z < y, (y + nz) = 2x + 3 and 0 < m < 10,
which have a specific BET surface of at least 50 m²/g and which are modified with additives, characterized in that layer compounds corresponding to formula I are precipitated from aqueous solutions or suspensions containing the ions M^{(II)}, M^{(III)} and Aⁿ⁻ in the presence of
B) polyols containing 3 to 30 carbon atoms and at least 2 hydroxyl groups,
C) esters of partly and completely epoxidized unsaturated carboxylic acids containing 6 to 22 carbon atoms,
D) full and partial esters of polyols containing 3 to 30 carbon atoms and 2 to 12 hydroxyl groups with carboxylic acids containing 6 to 22 carbon atoms and
E) alkyl and aryl phosphites,
dried and optionally redried and the product obtained is ground in the presence of polar organic solvents or water with one or more polymeric additives which are dissolved in polar organic solvents and/or in water having pH values above 8 and which have a molecular weight of 500 to 50,000, dried and optionally redried.

15. A process for the production of cationic layer compounds corresponding to general formula I:
[M^{(II)}ₓM^{(III)}(OH)_{y}](Aⁿ⁻)_{z} · mH₂O (I)
in which
M^{(II)} represents at least one divalent metal ion,
M^{(III)} represents at least one trivalent metal ion,
Aⁿ⁻ represents an acid anion having a charge n (n = 1, 2 or 3),
with the proviso that 1 < x < 5, 0 ≦ z < y, (y + nz) = 2x + 3 and 0 < m < 10,
which have a specific BET surface of at least 50 m²/g and which are modified with additives, characterized in that layer compounds corresponding to formula I are ground in the presence of polar organic solvents or water with
A) one or more polymeric additives which are dissolved in polar organic solvents and/or in water having pH values above 8 and which have a molecular weight of 500 to 50,000,
on their own or in combination with one or more additives selected from the following groups:
B) polyols containing 3 to 30 carbon atoms and at least 2 hydroxyl groups,
C) esters of partly and completely epoxidized unsaturated carboxylic acids containing 6 to 22 carbon atoms,
D) full and partial esters of polyols containing 3 to 30 carbon atoms and 2 to 12 hydroxyl groups with carboxylic acids containing 6 to 22 carbon atoms and
E) alkyl and aryl phosphites,
dried and optionally redried.

16. The use of the cationic layer compounds as claimed in any of claims 1 to 11 as co-stabilizers for halogen-containing synthetic resins stabilized with calcium and/or zinc salts of C₆₋₂₂ carboxylic acids.

17. The use of the cationic layer compounds produced in accordance with any of claims 12 to 15 as co-stabilizers for halogen-containing synthetic resins stabilized with calcium and/or zinc salts of C₆₋₂₂ carboxylic acids.

## Revendications

1. Composés stratifiés cationiques de la formule générale I :
[M^{(II)}ₓM(^{(III)}(OH)_{y}](Aⁿ⁻)_{z} · m H₂O (I)
dans laquelle,
M^{(II)} représente au moins un ion métallique bivalent,
M^{(III)} représente au moins un ion métallique trivalent,
Aⁿ⁻ représente au moins un anion acide de charge n (n=1, 2 ou 3),
et sont valables les conditions 1 < x < 5, 0 ≦ z < y, (y + nz) = 2 x + 3 et 0 < m < 10,
avec une surface spécifique selon BET d'au moins 50 m²/g et modifiée par des additifs,
caractérisés en ce que
ils sont modifiés selon la revendication 1,
A) par un ou plusieurs additifs polymères, qui sont dissous dans des solvants polaires organiques et/ou dans de l'eau avec des valeurs de pH supérieures à 8 et possèdent un poids moléculaire de 500 à 50 000,
sont choisis seuls ou en combinaison avec un ou plusieurs additifs parmi les groupes,
B) Polyols avec de 3 à 30 atomes de C et au moins 2 groupes hydroxyle, et
C) Esters d'acides carboxyliques insaturés partiellement et complètement epoxydés avec de 6 à 12 atomes de C, et
D) Esters complets et partiels de polyols de polyols ayant de 3 à 30 atomes de C et de 2 à 12 groupes hydroxyle avec des acides carboxyliques ayant de 6 à 22 atomes de C, et
E) Phosphites d'alkyle et phosphite d'aryle.
- en faisant précipiter, sécher et éventuellement sécher à nouveau des composés stratifiés de la formule (I) à partir de solutions aqueuses ou de suspensions, qui contiennent des ions M^{(II)}, M^{(III)} et Aⁿ⁻, en présence d'un ou plusieurs additifs polymères A) seuls ou en combinaison avec un ou plusieurs additifs choisis dans les groupes B) à E),
- en broyant, en faisant sécher et éventuellement sécher à nouveau des composés stratifiés de la formule (I) en présence de solvants ou d'eau avec un ou plusieurs additifs polymères A) seuls ou en combinaison avec un ou plusieurs additifs choisis à partir des groupes B) à E).

2. Composés stratifiés cationiques selon la revendication 1,
caractérisés en ce que
dans la formule générale (I) M^{(II)} représente un ion magnésium bivalent ou M^{(III)} un ion aluminium trivalent ou Aⁿ⁻ un ion carbonate.

3. Composés stratifiés cationiques selon une des revendications 1 à 2,
caractérisés en ce que
les composés stratifiés de la formule générale I sont des hydrotalcites.

4. Composés stratifiés cationiques selon une des revendications 1 à 3,
caractérisés en ce que
ils sont modifiés avec un ou plusieurs additifs polymères choisis dans le groupe des homo et copolymères d'acide acrylique et d'acide méthacrylique des sulfonates de lignine et des acides gras trimères.

5. Composés stratifiés cationiques selon une des revendications 1 à 4,
caractérisés en ce que
ils sont modifiés par un ou plusieurs polymères choisis dans le groupe des polymères d'acide acrylique et d'acide méthacrylique ainsi que leurs copolymères avec des monomères non saturés comportant des groupes d'acide sulfonique, des monomères non saturés contenant des groupes d'acide phosphonique, des acides carboxyliques aliphatiques, non saturés ayant de 3 à 5 atomes de C, des amides d'acides carboxyliques aliphatiques, non saturés ayant de 3 à 5 atomes de C, des monomères non saturés contenant des groupes amino et/ou leurs sels, de l'acétate de vinyle, du chlorure de vinyle, du nitrile acrylique, du chlorure de vinylidène, du 1,3-butadiène, du styrène et de l'alkylstyrolène ayant 1 à 4 atomes de C dans le radical alkyle.

6. Composés stratifiés cationiques selon une des revendications 1 à 5,
caractérisés en ce que
ils sont modifiés par un additif polymère choisi dans le groupe des polymères d'acide acrylique et d'acide méthacrylique ainsi que de leurs copolymérisats avec du styrène, de l'alkylstyrolène ayant de 1 à 4 atomes de C dans le radical alkyle, de l'acide styrène sulfonique, de l'acide maléique et/ou leurs sels et de l'anhydride maléique.

7. Composés stratifiés cationiques selon une des revendications 1 à 6,
caractérisés en ce que
ils sont modifiés par des additifs polymères ayant des poids moléculaires de 1 000 à 10 000.

8. Composés stratifiés cationiques selon une des revendications 1 à 7,
caractérisés en ce que
ils sont modifiés avec un ou plusieurs additifs polymères en combinaison avec un ou plusieurs additifs du groupe des polyols ayant de 3 à 30 atomes de C, qui portent pour 3 atomes de C au moins un groupe hydroxyle ou un oxygène d'éther, de préférence du glycérol et/ou des mélanges d'oligoglycérol techniques avec des degrés de condensation moyens de 2 à 10.

9. Composés stratifiés cationiques selon une des revendications 1 à 8,
caractérisés en ce que
ils sont modifiés avec un ou plusieurs additifs polymères en combinaison avec un ou plusieurs additifs du groupe d'esters d'alcools trivalents et d'acides carboxyliques non saturés complètement époxydés avec de 12 à 22 atomes de C, de préférence des esters de glycérol et en particulier d'huile de soja époxydée, d'huile de navette époxydée et d'huile de tournesol époxydée.

10. Composés stratifiés cationiques selon une des revendications 1 à 9,
caractérisés en ce que
ils sont modifiés avec un ou plusieurs additifs polymères en combinaison avec un ou plusieurs additifs du groupe d'esters partiels de glycérol, de mélanges d'oligoglycérol techniques avec des degrés de condensation moyens de 2 à 10 et des acides carboxyliques aliphatiques saturés et/ou non saturés ayant de 6 à 22 atomes de C.

11. Composés stratifiés cationiques selon une des revendications 1 à 10,
caractérisés en ce que
ils contiennent les additifs polymères seuls ou en combinaison avec un ou plusieurs additifs des groupes B) à E) dans des quantités de 0,5 à 15 % en poids, par rapport au composé stratifié cationique, les additifs polymères étant mis en oeuvre en combinaison avec les autres additifs, de préférence en quantités de 10 à 99 % en poids et en particulier de 30 à 95 % en poids, par rapport à la quantité totale d'additifs;

12. procédé de préparation de composés stratifiés cationiques de la formule générale I,
[M^{(II)}ₓM(^{(III)}(OH)_{y})](Aⁿ⁻)_{z} · m H₂O (I)
dans laquelle,
M^{(II)} représente un ion métallique bivalent,
M^{(III)} représente un ion métallique trivalent,
Aⁿ⁻ représente un anion acide de charge n (n = 1, 2 ou 3),
et sont valables les conditions 1 < x < 5, 0 ≦ z < y, (y + nz) = 2x + 3 et 0 < m < 10,
avec une surface spécifique selon BET d'au moins 50 m²/g et modifiée avec des additifs, caractérisé en ce que
[M^{(II)}ₓM(^{(III)}(OH)_{y}](Aⁿ⁻)_{z} · m H₂O (I)
dans laquelle,
M^{(II)} représente un ion métallique bivalent,
M^{(III)} représente un ion métallique trivalent,
Aⁿ⁻ représente un anion acide de charge n (n = 1, 2 ou 3)
et sont valables les conditions 1 < x < 5, 0 ≦ z < y, (y + nz) = 2x + 3 et 0 < m < 10,
avec une surface spécifique selon BET d'au moins 50 m²/g et modifiée avec des additifs, caractérisé en ce qu'on fait précipiter, on sèche et éventuellement on sèche encore des composés stratifiés de la formule I provenant de solutions aqueuses ou de suspensions, qui contiennent les ions M^{(II)}, M^{(III)} et Aⁿ⁻ en présence de :
A) par un ou plusieurs additifs polymères, qui sont dissous dans des solvants organiques polaires et/ou dans de l'eau avec des valeurs de pH supérieures à 8 et ont un poids moléculaire de 500 à 50 000,
seuls ou en combinaison avec un ou plusieurs additifs choisis dans les groupes de
B) Polyols avec de 3 à 30 atomes de C et au moins 2 groupes hydroxyle, et
C) Esters d'acides carboxyliques non saturés epoxydés partiellement et complètement ayant de 6 à 12 atomes de carbone, et
D) Esters complets et partiels de polyols ayant de 3 à 30 atomes de carbone et de 2 à 12 groupes hydroxyle avec des acides carboxyliques ayant de 6 à 22 atomes de C, et
E) Phosphites d'alkyle et phosphite d'aryle.
On fait précipiter, on sèche et éventuellement on sèche encore des composés stratifiés de la formule I provenant de solutions aqueuses ou de suspensions, qui contiennent les ions M^{(II)}, M^{(III)} et Aⁿ⁻ en présence de :
A) par un ou plusieurs additifs polymères, qui sont dissous dans des solvants organiques polaires et/ou dans de l'eau avec des valeurs de pH supérieures à 8 et ont un poids moléculaire de 500 à 50 000,
seuls ou en combinaison avec un ou plusieurs additifs choisis dans les groupes de
B) Polyols avec de 3 à 30 atomes de C et au moins 2 groupes hydroxyde, et
C) Esters d'acides carboxyliques non saturés époxydés partiellement et complètement ayant de 6 à 12 atomes de carbone, et
D) Esters complets et partiels de polyols ayant de 3 à 30 atomes de carbone et de 2 à 12 groupes hydroxyde avec des acides carboxyliques ayant de 6 à 22 atomes de C, et
E) Phosphites d'alkyle et phosphite d'aryle.

13. Procédé de préparation de composés stratifiés cationiques de la formule générale I,
[M^{(II)}ₓM(^{(III)}(OH)_{y}](Aⁿ⁻)_{z} · m H₂O (I)
dans laquelle,
M^{(II)} représente un ion métallique bivalent,
M^{(III)} représente un ion métallique trivalent,
Aⁿ⁻ représente un anion acide de charge n (n = 1, 2 ou 3).
et les conditions 1 < x < 5, 0 ≦ z < y, (y + nz) = 2x + 3 et 0 < m < 10,
avec une surface spécifique selon BET d'au moins 50 m²/g et modifiée avec des additifs,
caractérisé en ce que
on broie, sèche et éventuellement sèche encore des composés stratifiés de la formule I provenant de solutions aqueuses ou de suspensions, qui contiennent les ions M^{(II)}, M^{(III)} et Aⁿ⁻ en présence de :
A) un ou plusieurs additifs polymères, qui sont dissous dans des solvants organiques polaires et/ou dans de l'eau avec des valeurs de pH supérieures à 8 et ont un poids moléculaire de 500 à 50 000,
et le produit obtenu est broyé, séché et éventuellement séché à nouveau en présence de solvants organiques polaires ou d'eau avec un ou plusieurs additifs, choisis dans les groupes,
B) Polyols avec de 3 à 30 atomes de C et au moins 2 groupes hydroxyde, et
C) Esters d'acides carboxyliques non saturés époxydés partiellement et complètement ayant de 6 à 22 atomes de carbone, et
D) Esters complets et partiels de polyols ayant de 3 à 30 atomes de carbone et de 2 à 12 groupes hydroxyde avec des acides carboxyliques ayant de 6 à 22 atomes de C, et
E) Phosphites d'alkyle et d'aryle.

14. Procédé de préparation de composés stratifiés cationique de la formule générale (I) :
[M^{(II)}ₓM(^{(III)}(OH)_{y}](Aⁿ⁻)_{z} · m H₂O (I)
dans laquelle,
M^{(II)} représente un ion métallique bivalent,
M^{(III)} représente un ion métallique trivalent,
Aⁿ⁻ représente un anion acide de charge n (n = 1, 2 ou 3).
et les conditions 1 < x < 5, 0 ≦ z < y, (y + nz) = 2x + 3 et 0 < m < 10,
avec une surface spécifique selon BET d'au moins 50 m²/g et modifiée avec des additifs,
caractérisé en ce que
on fait précipiter, sèche et éventuellement sèche à nouveau des composés stratifiés de la formule I à partir de solutions aqueuses ou de suspensions, qui contiennent les ions M^{(II)}, M^{(III)} et Aⁿ⁻ en présence de :
B) Polyols avec de 3 à 30 atomes de C et au moins 2 groupes hydroxyde, et
C) Esters d'acides carboxyliques non saturés époxydés partiellement et complètement ayant de 6 à 22 atomes de C, et
D) Esters complets et partiels de polyols ayant de 3 à 30 atomes de C et de 2 à 12 groupes hydroxyde avec des acides carboxyliques ayant de 6 à 22 atomes de C, et
E) Phosphites d'alkyle et d'aryle.
et le produit obtenu est broyé, séché et éventuellement séché à nouveau en présence de solvants organiques polaires ou d'eau avec un ou plusieurs additifs polymères, qui sont dissous dans des solvants organiques polaires et/ou dans de l'eau avec des valeurs de pH supérieures à 8 et qui possèdent un poids moléculaire de 500 à 50 000.

15. Procédé de préparation de composés stratifiés cationiques de formule générale I,
[M^{(II)}ₓM(^{(III)}(OH)_{y}](Aⁿ⁻)_{z} · m H₂O (I)
dans laquelle,
M^{(II)} représente un ion métallique bivalent,
M^{(III)} représente un ion métallique trivalent,
Aⁿ⁻ représente un anion acide de charge n (n = 1, 2 ou 3).
et les conditions 1 < x < 5, 0 ≦ z < y, (y + nz) = 2x + 3 et 0 < m < 10,
avec une surface spécifique selon BET d'au moins 50 m²/g et modifiée avec des additifs,
caractérisé en ce que
on broie, sèche et éventuellement sèche à nouveau des composés stratifiés de la formule I en présence de solvants organiques polaires ou d'eau avec,
A) un ou plusieurs additifs polymères, qui sont dissous dans des solvants organiques polaires et/ou dans de l'eau avec des valeurs de pH supérieures à 8 et ont un poids moléculaire de 500 à 50 000,
seuls ou en combinaison avec un ou plusieurs additifs choisis dans les groupes,
B) Polyols avec de 3 à 30 atomes de C et au moins 2 groupes hydroxyde, et
C) Esters d'acides carboxyliques non saturés partiellement et totalement époxydés ayant de 6 à 22 atomes de C, et
D) Esters totalement et partiellement époxydés de polyols ayant de 3 à 30 atomes de C et de 2 à 12 groupes hydroxyde avec des acides carboxyliques ayant de 6 à 22 atomes de C, et
E) Phosphites d'alkyle et d'aryle.

16. Utilisation de composés stratifiés cationiques selon une des revendications 1 à 11 comme co-stabilisants pour des matières plastiques contenant des halogènes stabilisés avec des sels de calcium et/ou des sels de zinc d'acides carboxyliques ayant de 6 à 22 atomes de C.

17. Utilisation de composés stratifiés cationiques selon une des revendications 12 à 15 comme co-stabilisants pour des matières plastiques contenant des halogènes stabilisés avec des sels de calcium et/ou des sels de zinc d'acides carboxyliques ayant de 6 à 22 atomes de C.
